# EUROPÄISCHE PATENTSCHRIFT

(11) **EP 1 530 909 B1**
(45) Veröffentlichungstag und Bekanntmachung des Hinweises auf die Patenterteilung: **21.03.2007**
(21) Anmeldenummer: 04024335.4
(22) Anmeldetag: 13.10.2004
(51) Int. Cl.: A23L 1/36

(54) **Herstellungsverfahren für pfanzliche Lebensmittel aus Kokosnüssen**
Process for making a vegetable food product from coconut
Procédé d'obtention d'un aliment végétal à partir de noix de coco

(30) Priorität: 11.11.2003 DE 10352583
(43) Veröffentlichungstag der Anmeldung: 18.05.2005
(73) Patentinhaber: Baensch, Werner, 37603 Holzminden (DE)
(72) Erfinder: Baensch, Werner, 37603 Holzminden (DE)

(56) Entgegenhaltungen:
- EP-A- 0 960 568
- WO-A-01/60181
- DE-A1- 2 422 640
- GB-A- 1 290 776
- GB-A- 2 094 334
- US-A- 5 891 493
- G.RAMA RAO: "Enzymic degradation of coconut meal by Meiclase-P" JOURNAL OF FOOD SCIENCE AND TECHNOLOGY, Bd. 6, Nr. 1, 1969, Seiten 21-22, XP008042811

## Beschreibung

Die Erfindung bezieht sich auf ein Herstellungsverfahren für pflanzliche Lebensmittel aus Kokosnüssen.

Bei der derzeitigen Verarbeitung von Kokosnüssen wird besondere Bedeutung auf die Ölgewinnung gelegt, wobei der bei der Ölgewinnung erzeugte Presskuchen allenfalls noch als Viehfutter Verwendung findet.

Dazu wird in den Erzeugerländern eine Methode angewandt, bei der ein Kokosnussfleisch aus der Kokosnuss mechanisch gewonnen und dieses über mehrere Tage in der Sonne oder auf beheizten Trockenöfen ausgebreitet und somit getrocknet wird. Es entsteht dabei eine sog. "Copra", die mittels großer Schneckenpressen abgepresst wird. Mit diesem Pressverfahren wird - bedingt durch die Bauart - eine Presstemperatur von deutlich über 100°C, meist 130-160°C, erreicht. Diese hohen Presstemperaturen führen dazu, dass Einweiße und Kohlenhydrate karamelisiert und dadurch für die menschliche Ernährung wertlos werden. Dieser Presskuchen findet daher, wie bereits erwähnt, bestenfalls als Tierfutter Verwendung. Die Presskuchen erhalten durch die "Brat-" Temperaturen bei der Pressung eine dunkelbraune Färbung, die auf die Bildung von Melanoidinen und Akrylamiden schließen lassen. Auf diese Weise gehen die wertvollsten Inhaltsstoffe der Kokosnuss, nämlich Eiweiß und Zucker für die menschliche Ernährung verloren.

Kokosnussfleisch enthält darüber hinaus bis zu 38% natürliche Faserstoffe. Die Fasern bestehen aus Zellulose und Hemizellulose, was gleichzusetzen ist mit Holz, was für die menschliche Ernährung ungeeignet, weil unverdaulich ist.

Aus der DE 24 22 640 A1 ist ein Verfahren zur Herstellung von Kokosnussflocken und den daraus erhaltenen Produkten bekannt. In dem referierten Stande der Technik wird im wesentlichen das zuvor Gesagte bestätigt. Diese Patentanmeldung hat sich die Aufgabe gestellt, ein Verfahren zu entwickeln, das neben der Schaffung des Kokosnussöls auch die Verwendung der Restbestandteile erlaubt. Zwar ist dort unter anderem ein Endprodukt, nämlich Kokosnussflocken beschrieben, für dessen Weiterverarbeitung zu pflanzlichen Lebensmitteln jedoch keine Angaben gemacht sind.

Vielmehr wird bei dem Verarbeitungsverfahren angegeben, dass die von Kokosmilch geleerten Nüsse in einen Autoklaven gegeben und einem Dampfdruck von 1,5 kg/cm² acht Stunden unterworfen werden. Schon dieser Hinweis zeigt, dass hier mit hohen Temperaturen gearbeitet wird und es darf ohne weiteres unterstellt werden, dass dadurch eine solch große Hitzeschädigung bzw. Zerstörung der im Presskuchen vorhandenen natürlichen pflanzlichen Eiweiße und Kohlenhydrate verursacht wird, dass diese für die menschliche Ernährung verloren gehen.

Die Aufgabe der vorliegenden Erfindung besteht demzufolge darin, ein Herstellungsverfahren zur Schaffung pflanzlicher Lebensmittel aus Kokosnüssen anzugeben, das neben der Gewinnung des Öls nahezu die gesamten Restbestandteile für die menschliche Ernährung zugänglich macht und dies unter Beibehaltung der Eiweiße und Kohlenhydrate. Diese Aufgabe gelingt mit den in Anspruch 1 enthaltenen Verfahrensschritten.

Anhand der Darstellung eines Verfahrensablaufes soll dieses neue Herstellungsverfahren beispielhaft beschrieben werden:

Das weiße, aus frischen Kokossnüssen ausgeschabte Kokosnussfleisch wird in einem Fließbett bei schonenden Temperaturen unterhalb von 100°C getrocknet. Dabei entstehen Kokosraspeln, die auch unter dem englichen Begriff "dessiccated Coconut" marktbekannt sind. Diese weisen einen Restfeuchtegehalt von unter 5% auf.

Anschließend erfolgt die Pressung dieser Kokosraspeln mittels einer Presse, wobei das in den Kokosraspeln enthaltene Kokosöl in einem niedrigen Temperaturbereich zwischen 40°C und maximal 60°C gewonnen und dabei die Kokoraspeln auf einen Öl- Restfettgehalt von ca. 10% abgepresst wird. Das Kokosöl wird einer weiteren, an sich bekannten Aufarbeitung und Verwendung zugeführt. Das bei diesem Pressvorgang verbleibende Nebenprodukt ist ein heller, weißer Presskuchen, der zur weiteren Herstellung pflanzlicher, diätischer Erzeugnisse verwendet wird. Er ist damit Ausgangsprodukt für den weiter nachfolgend beschriebenen Verfahrensablauf:

Feinst-Vermahlung des fettarmen Presskuchens bis herunter auf eine Partikelgröße von < 150 µm. Bei diesem Mahlprozess darf die Reibungswärme keinesfalls 80°C überschreiten, da sonst die pflanzlichen Eiweisse koagulieren, also für die menschliche Ernährung unbrauchbar werden.

Um die in dem Presskuchen enthaltenen Faserstoffe für die menschliche Verwertung zugänglich zu machen, wird dieser fettreduzierte, trockene Presskuchen fermentiert und durch Zugabe von Wasser vermaischt, wobei zusätzlich Enzympräparate hinzugegeben werden, die aus verschiedenen Enzymarten bestehen. Dies können vornehmlich Mischungen aus Cellulase-, Beta-Glucanese- und Hemicellulase-Präparaten sein. In der Praxis wurden Handeslpräparate wie Alphamalt HC 6043, HC 12042, T 12031, sowie Depol 333P und Cellulase 13P erfolgreich für den enzymatischen Abbau der Faserstoffe eingesetzt. Insbesondere in einer Dosierung von 15-20 g auf 100 kg Maische bewirkten diese Enzympräparate einen hinreichenden Abbau der cellulosehaltigen Faserstoffe.

Bei der weiteren Verarbeitung ist von entscheidender Bedeutung, dass die Fermentationsbedingungen optimiert werden, indem der Fermentationslauf zeitlich auf 12 Stunden bei einem Temperaturoptimum von 42°C begrenzt wird, Durch Zugabe von a) milchsäurebildender Starterkulturen oder b) Zitronensäure kann der anfängliche Säuregrad der Maische von pH 6,5 auf einen, den enzymatischen Abbau der Faserstoffe begünstigenden pH-Wert von 4,0-5,5 gesenkt werden.

In der Anwendung a) resultiert eine mild gesäuerte Maische mit charakteristischer Geschmacksnote nach Käse, während in der Anwendung b) die typische süße Geschmacksrichtung der Kokosnuss erhalten bleibt.

Die Weiterbearbeitung sieht eine Homogenisierung, Pasteurisierung sowie Sprühtrocknung der fermentierten Maische vor, was heißt, dass nach erfolgter Fermentation die Faserstoffe auf enzymatischem Wege so weit abgebaut sind, dass diese durch Abschließen der Homogenisierung bei einem Druck von 200-300 bar in so kleine Fragmente zerlegt werden, dass sie sensorisch nicht mehr wahrnehmbar sind. Daran schließt sich eine Pasteurisierung und Vakuumsprühtrocknung der Maische an.

Aus diesem Prozess geht ein Kokosmehl hervor, dessen hoher Gehalt an natürlichen, ernährungsphysiologisch wertvollen Inhaltsstoffen sich ausgezeichnet zur Weiterverarbeitung und Herstellung verschiedenster Lebensmittel eignet. Es besitzt ein hohes Wasserbindevermögen und eignet sich daher besonders zur Herstellung und Verwendung von bzw. in diätischen Cremes, Soßen, Dips, Brotaufstrichen, Desserts, Süßwaren, Yoghurt, Frucht- und (Kokos)-Milchgetränken und Backwaren.

Es ist durch die fermentative Aufbereitung besonders cholesterinfrei, glutenfrei, laktosefrei, reich an hochwertigen pflanzlichen Proteien (Aminosäuren) und natürlichen Ballaststoffen.

Durch diese neuartige Verarbeitung von Kokosnüssen eröffnet sich gerade in den Erzeugerländern eine neue, vielversprechende Art der Ernährungsversorgung, so dass dieses Verfahren insbesondere volkswirtschaftlich von großer Bedeutung ist.

## Patentansprüche

1. Herstellungsverfahren für pflanzliche Lebensmittel aus Kokosnüssen, enthaltend folgende Verfahrensschritte:
- Gewinnung von Kokosraspeln aus vorzugsweise frischem, aus der Kokosnussschale entfernten Kokonnussfleisches und deren Trocknung unterhalb 100°C,
- Gewinnung von Kokosöl und eines fettarmen, ca 5% Restfeuchtegehalt enthaltenden Presskuchens durch Pressung der Kokosraspeln innerhalb eines Temperaturbereichs zwischen 40 und 60°C,
- Feinst-Vermahlung des fettarmen Presskuchens auf Partikelgrößen kleiner 150 µm bei einer Mahltemperatur von maximal 80°C,
- Fermentation des vermahlenen Presskuchens durch Einmaischung mit Wasser zur Schaffung eines pumpfähigen Breis, dem ein aus verschiedenen Enzymarten zusammengesetztes Enzympräparat zugesetzt ist,
- Gewinnung von Kokosmehl durch Homogenisierung, Pasteurisierung und Sprühtrocknung der auf enzymatischem Wege fermentierten Maische und dessen Wei-. Terverarbeitung zu pflanzlichen Produkten.

2. Verfahren nach Anspruch 1, **dadurch gekennzeichnet, dass** die Einmaischung durch Einrühren von fünf Teilen Wasser auf einen Teil Presskuchen erfolgt.

3. Herstellungsverfahren nach Anspruch 1, **dadurch gekennzeichnet, dass** die Enzymarten der Enzympräparate aus einer Mischung von vorzugsweise Cellulase-, Beta-Glucanase- und Hemicellulase-Präparaten bestehen.

4. Herstellungsverfahren nach Anspruch 1, **gekennzeichnet durch** Einstellung optimaler Fermentationsbedingungen **durch** Regulierung der Zeit- und Temperatureinwirkung sowie des Säuregrades der Maische, wobei die Fermentationszeit 12 Stunden bei einer Temperatur von 42°C verläuft und der anfängliche Säuregrad der Maische von ca. pH 6,5 auf pH 4,0-5,5 abgesenkt ist.

5. Verfahren nach Anspruch 4, **gekennzeichnet durch** Absenkung des Säuregrades der Maische **durch** Zugabe von Mono- und Disacchariden (Zucker) oder **durch** Zugabe von Zitronensäure.

6. Herstellverfahren nach Anspruch 1, **dadurch gekennzeichnet, dass** die Homogenisierung der fermentierten Säure bei einem Druck von 200-300 bar und die Sprühtrocknung im Vakuum-Sprühtrocknungsverfahren erfolgt.

## Claims

1. A process for producing vegetable foods from coconuts, the process comprising the following process steps:
isolating coconut rasps from fresh coconut meat removed from the coconut shell and then dried at less than 100° C;
isolating coconut oil and a low-fat pressed cake containing ca. 5% residual moisture by pressing the coconut rasps within a temperature range between 40° C and 60° C;
pulverizing the low-fat pressed cake to particle sizes of less than 150 µm at a maximum pulverization temperature of 80° C;
fermenting the pulverized pressed cake by mashing the pulverized pressed cake with water to create a pumpable pulp, to which is added an enzyme preparation composed of various types of enzymes and
isolating coconut meal by means of homogenisation, pasteurisation an spray drying of the mash fermented with enzymes and further processing into vegetable products.

2. A process in accordance with claim 1, wherein the mashing is carried out by stirring in five parts water to one part pressed cake.

3. A production process in accordance with claim 1, wherein the enzyme types of the enzyme preparations consist of a mixture of cellulase, beta-glucanase and hemicellulase preparations.

4. A production process in accordance with claim 1, further comprising setting optimal fermentation conditions by means of controlling the time and temperature effects as well as the degree of acidity of the mash , whereby the fermentation time runs for 12 hours at a temperature of 42° C, and the initial degree of acidity of the mash is lowered from ca. pH 6.5 to pH 4.0-5.5.

5. A production process in accordance with claim 4, wherein lowering of the degree of acidity of the mash includes adding mono- and disaccharides (sugar) or by adding citric acid.

6. A production process in accordance with claim 1, wherein the homogenisation of the fermented acid takes place at a pressure of 200-300 bar and the spray drying takes place according to the vacuum spray drying process.

## Revendications

1. Procédé d'obtention d'un aliment végétal à partir de noix de coco comprenant des pas de procédés suivants :
isolation des râpes de coco par la pulpe fraîche du noix de coco enlevée de la coquille de noix de coco et après dessiccation au-dessous de 100°C.
isolation de l'huile de coco et d'un tourteau graisse réduite contenant une humidité restante d'env. 5% par pressurage des râpes de coco dans une gamme de température entre 40°C et 60°C.
pulvérisation du tourteau graisse réduite aux dimensions des particules moins de 150 µm avec une température de pulvérisation de 80°C au maximum.
fermentation du tourteau pulvérisé par trempe avec eau afin d'obtenir une pulpe pompée à laquelle une préparation d'enzyme est ajoutée et se compose des différents types d'enzymes.
isolation de farine de coco par homogénéisation, pasteurisation et spray dessiccation de la trempe fermentée avec enzymes et traitement ultérieur en produits végétaux.

2. Procédé selon droit 1, **caractérisé que** la trempe sera faite par délayage de cinq parts d'eau à une part du tourteau.

3. Procédé d'obtention selon droit 1, **caractérisé que** les types d'enzymes des préparations d'enzymes se composent d'un mélange des préparations cellulase, beta-glucanase et hemicellulase.

4. Procédé d'obtention selon droit 1, **caractérisé par** ajustage optimal des conditions de fermentation moyennant contrôle d'effet du temps et de la température ainsi que l'acidité de la trempe, à ceci le temps de fermentation est de 12 heures à une température de 42°C et l'acidité initiale de la trempe est baissée d'env. pH 6,5 à pH 4,0-5,5.

5. Procédé selon droit 4, **caractérisé par** la baisse de l'acidité de la trempe en ajoutant mono- et disaccharides (sucre) ou en ajoutant d'acide citrique.

6. Procédé d'obtention selon droit 1, **caractérisé que** la homogénéisation d'acide fermentée s'effectuera à une pression de 200-300 bar et la spray dessiccation s'effectuera en accord avec le procédé de vacuum spray dessiccation.
